# EUROPÄISCHE PATENTANMELDUNG

(11) **EP 3 949 795 A1**
(43) Veröffentlichungstag der Anmeldung: **09.02.2022**
(21) Anmeldenummer: 21187150.4
(22) Anmeldetag: 22.07.2021
(51) Int. Cl.: A45C 5/14, A45C 13/38, B62B 1/26, A45C 3/04, A45C 7/00

(54) **ROLLWAGEN**

(30) Priorität: 03.08.2020 DE 102020120429
(71) Anmelder: Carl Freudenberg KG, 69469 Weinheim (DE)
(72) Erfinder: Hem, Sudhana, 36020 Solagna (Vi) (IT); Durello, Riccardo, 30033 Noale (Ve) (IT); Tescaro, Francesco, 35026 Conselve (PD) (IT); Flath, Johannes, Dr., 68519 Viernheim (DE)

(57) **Zusammenfassung**

Rollwagen (1) umfassend ein Gestell (2), zumindest eine Laufrolle (3), welche an dem Gestell (2) drehbar angeordnet ist sowie eine Tasche (4), welche über Befestigungselemente (5) lösbar an dem Gestell (2) befestigbar ist, wobei zumindest ein Befestigungselement (5) einen Formschluss ausbildet.

## Beschreibung

Die Erfindung betrifft einen Rollwagen, umfassend ein Gestell, zumindest eine Laufrolle, welche an dem Gestell drehbar angeordnet ist, sowie eine Tasche, welche über Befestigungselemente lösbar an dem Gestell befestigbar ist.

Ein derartiger Rollwagen ist beispielsweise aus der EP 1 958 530 A2 bekannt. Derartige Rollwagen werden verwendet, um Gegenstände, beispielsweise Einkäufe einfacher und ermüdungsfrei über weitere Strecken transportieren zu können. Hierzu werden die Gegenstände in der Tasche verstaut und der Rollwagen kann über weitere Strecken gezogen werden. Dabei rollt der Rollwagen über die Laufrolle auf dem Boden ab. Das Gestell ist häufig L-förmig ausgebildet, wobei zwei Laufrollen aneinander gegenüber liegenden Seiten im Übergangsbereich zwischen dem kürzeren und dem längeren Schenkel angeordnet sind.

Die Befestigung der Tasche an dem Gestell erfolgt zumeist über Schlaufen oder dergleichen, welche aus der Tasche ausgebildet sind oder welche an der Tasche befestigt sind. Wenn die Tasche stabil an dem Gestell befestigt sein soll, ist allerdings einiger Kraftaufwand erforderlich, um die Tasche an dem Gestell zu befestigen oder die Tasche wieder von dem Gestell zu lösen.

Es ist auch bekannt, an einer Seite der Tasche Textilstreifen zu befestigen, welche um das Gestell geschlungen und mittels Klettverschlusses verschlossen werden können. Aber auch bei dieser Ausgestaltung ist für eine spielarme Befestigung und für das Lösen der Tasche ein hoher Kraftaufwand erforderlich.

Der Erfindung liegt die Aufgabe zugrunde, einen Rollwagen bereitzustellen, welcher ein sicheres und einfaches Befestigen und Lösen der Tasche an dem Gestell ermöglicht.

Diese Aufgabe wird mit den Merkmalen von Anspruch 1 gelöst. Auf vorteilhafte Ausgestaltungen nehmen die Unteransprüche Bezug.

Der Rollwagen zur Lösung der Aufgabe umfasst ein Gestell, zumindest eine Laufrolle, welche an dem Gestell drehbar angeordnet ist, sowie eine Tasche, welche über Befestigungselemente lösbar an dem Gestell befestigbar ist, wobei zumindest ein Befestigungselement einen Formschluss ausbildet. Ein Formschluss entsteht durch das Ineinandergreifen von zwei Verbindungspartnern, wobei sich eine definierte Verbindung ergibt. Im Vergleich zu einer kraftschlüssigen Verbindung ist eine formschlüssige Verbindung besonders einfach herstellbar und es ergibt sich eine besonders feste Anbindung der Tasche an das Gestell.

Die Tasche weist vorzugsweise eine Rückseite, einen Boden und eine Deckelöffnung auf. Dabei kann die Tasche schlauchförmig ausgebildet sein. Die Deckelöffnung kann durch einen Deckel oder durch einen Rollverschluss verschließbar sein. Bei einem Rollverschluss wird der obere Rand der Tasche flach zusammengelegt und zum Verschließen aufgerollt. Des Weiteren kann die Tasche mit Aufsatztaschen versehen sein. Im Inneren der Tasche können Innenräume abgetrennt sein.

Vorzugsweise sind der Rückseite der Tasche Befestigungselemente zugeordnet. In einer einfachen Ausgestaltung sind lediglich im Bereich der Deckelöffnung Befestigungselemente an der Rückseite der Tasche angeordnet. Bei der einfachen Ausgestaltung steht der Boden der Tasche auf dem Gestell und eine Fixierung der Tasche an dem Gestell erfolgt über der Deckelöffnung zugeordnete Befestigungselemente. Eine besonders sichere Fixierung der Tasche an dem Gestell ergibt sich, wenn an der Rückseite Befestigungselemente sowohl im Bereich des Bodens als auch im Bereich der Deckelöffnung der Tasche angeordnet sind. Vorzugsweise sind die unteren Befestigungselemente an der Rückseite im Bereich des Bodens und die oberen Befestigungselemente an der Rückseite im oberen Drittel der Tasche angeordnet.

Vorzugsweise sind die Befestigungselemente als Schnappverschluss ausgebildet. Dabei können die Befestigungselemente gemäß einer vorteilhaften Ausgestaltung als Steckverschluss ausgebildet sein. Steckverschlüsse weisen ein erstes Element mit einer oder zwei Federzungen auf, welche in ein kongruent geformtes Gehäuse eingreifen. Dabei weist das Gehäuse seitliche Durchbrechungen auf, durch welche die Federzungen zum Öffnen der Befestigung bewegt werden können. Derartige Befestigungselemente ermöglichen eine sichere Befestigung der Tasche an dem Gestell, die Befestigungselemente sind darüber hinaus weit verbreitet und finden an Taschen, Rucksäcken oder dergleichen vielfältig Einsatz.

In diesem Zusammenhang ist denkbar, dass das Gestell im Bereich der Deckelöffnung mit Befestigungselementen versehen ist, welche eine formschlüssige Verbindung mit Befestigungselementen der Tasche eingehen, wobei die Befestigungselemente der Tasche gleichzeitig einen Verschluss, beispielsweise einen Rollverschluss, mit der Tasche eingehen können. Dies ermöglicht ein erweitertes Einsatzgebiet der an dem Gestell befestigbaren Tasche.

Das Gestell kann ein Bodenelement und ein Lehnenelement aufweisen. Dabei sind Bodenelement und Lehnenelement in etwa rechtwinklig zueinander angeordnet.

Vorzugsweise sind zwei Laufrollen vorgesehen, welche drehbar im Übergangsbereich zwischen Bodenelement und Lehnenelement seitlich angeordnet sind. Das Lehnenelement ist vorzugsweise mit einem Griffelement ausgerüstet, welches höhenverstellbar sein kann. Dies kann beispielsweise durch ein U-förmig ausgebildetes Griffelement realisiert sein, welches in das Lehnenelement teleskopartig einschiebbar ist. Die Tasche steht dabei auf dem Bodenelement und lehnt sich an dem Lehnenelement an. Die der Deckelöffnung zugeordneten Befestigungselemente des Gestells sind dementsprechend an dem Lehnenelement angeordnet.

Das Bodenelement kann mit Befestigungselementen ausgerüstet sein. Diese greifen formschlüssig in Befestigungselemente ein, welche dem Boden der Tasche zugeordnet sind.

Die dem Bodenelement zugeordneten Befestigungselemente können in einem Aufnahmeelement ausgebildet sein. Das Aufnahmeelement ist dabei vorzugsweise an dem Bodenelement des Gestells befestigt. Alternativ kann das Aufnahmeelement auch an dem Lehnenelement befestigt sein, vorzugsweise im Bereich des Bodenelementes. In dem Aufnahmeelement können materialeinheitlich und einstückig Befestigungselemente ausgebildet sein, welche formschlüssig in die Befestigungselemente der Tasche eingreifen. Dabei sind die Befestigungselemente des Bodenelementes vorzugsweise als Steckelemente ausgebildet, welche ein besonders einfaches Einfädeln der Befestigungselemente der Tasche ermöglichen. Dies ermöglicht ein einfaches und schnelles Befestigen der Tasche an dem Gestell.

Das Bodenelement und das Lehnenelement können U-förmig ausgebildet sein und bestehen vorzugsweise aus metallischem Werkstoff. Dabei kann das Bodenelement gelenkig an dem Lehnenelement angebunden sein, so dass der Rollwagen nach Entnehmen der Tasche platzsparend zusammengeklappt werden kann.

Einige Ausgestaltungen des erfindungsgemäßen Rollwagens werden nachfolgend anhand der Figuren näher erläutert. Diese zeigen, jeweils schematisch:
- Fig. 1: einen Rollwagen;
- Fig. 2: Befestigungselemente im Detail.

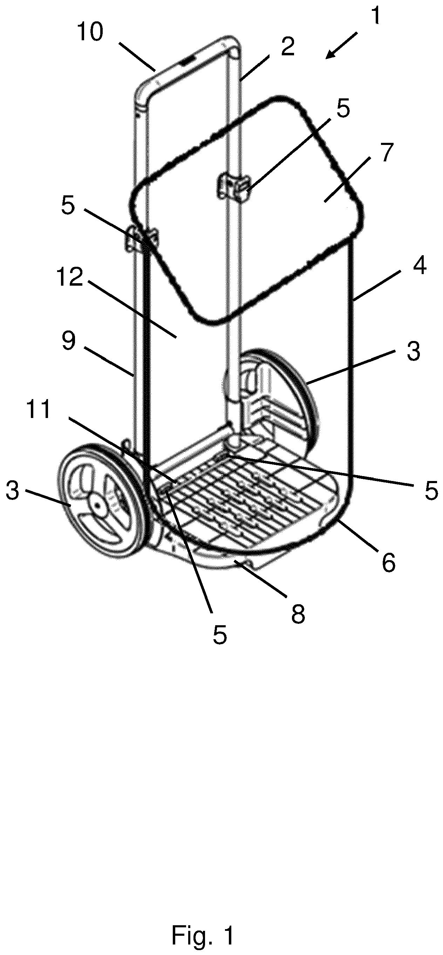

Figur 1 zeigt einen Rollwagen 1, umfassend ein Gestell 2 mit Bodenelement 8 und Lehnenelement 9. Das Bodenelement 8 ist aus U-förmig geformten Metallrohren ausgebildet. Das Lehnenelement 9 ist als Rohrrahmen aus Metallrohren ausgebildet.

Alternativ kann das Bodenelement 8 und das Lehnenelement 9 auch aus Kunststoff oder aus einem Kunststoff-Metall-Verbund ausgebildet sein.

Das Bodenelement 8 und das Lehnenelement 9 sind gelenkig miteinander verbunden. Dabei schließen das Bodenelement 8 und das Lehnenelement 9 in gebrauchsfertigem Zustand einen 90-Grad-Winkel ein. Zum Verstauen kann das Bodenelement 8 in Richtung des Lehnenelementes 9 geschwenkt werden.

Im Übergangsbereich zwischen Bodenelement 8 und Lehnenelement 9 ist das Gestell 2 mit zwei Laufrollen 3 ausgerüstet, welche drehbar an dem Gestell 2 befestigt sind. Auf das Gestell 2 ist eine Tasche 4 aufgesetzt und lösbar an dem Gestell 2 befestigt. Die Befestigung der Tasche 4 an dem Gestell 2 erfolgt über Befestigungselemente 5, wobei die Befestigungselemente 5 einen Formschluss in Form einer Schnappverbindung ausbilden.

Die Tasche 4 weist eine Rückseite 12, einen Boden 6 und eine Deckelöffnung 7 auf. Die Tasche 4 ist aus textilem Material ausgebildet. Der Rückseite 12 der Tasche 4 sind Befestigungselemente 5 zugeordnet, wobei Befestigungselemente 5 im Bereich des Bodens 6 und im oberen Drittel der Tasche 4 an der Rückseite angebracht sind. Dementsprechend weist das Gestell 2 am Bodenelement 8 und am Lehnenelement 9 Befestigungselemente 5 auf, welche kongruent aus den Befestigungselementen 5 der Tasche 4 ausgebildet sind.

Das Lehnenelement 9 ist bei der vorliegenden Ausgestaltung mit einem höhenverstellbaren Griffelement 10 versehen. Das Griffelement 10 ist U-förmig ausgebildet und teleskopierbar in dem Lehnenelement 9 angeordnet.

Die dem Bodenelement 8 zugeordneten Befestigungselemente 5 sind in einem Aufnahmeelement 11 ausgebildet, wobei das Aufnahmeelement 11 an dem Bodenelement 8 befestigt ist. Das Aufnahmeelement 11 ist aus Kunststoff ausgebildet und weist zu den Befestigungselementen 5 des Bodens 6 der Tasche 4 kongruente Befestigungselemente 5 auf.

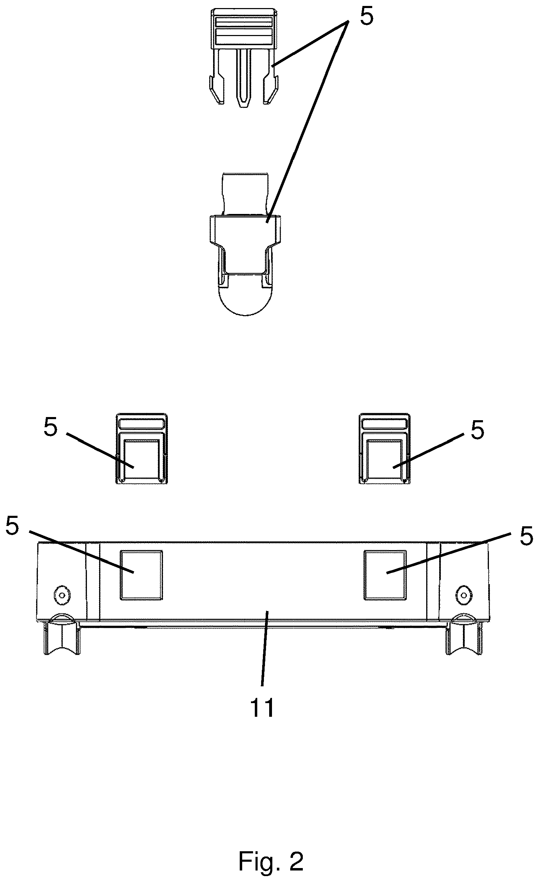

Figur 2 zeigt im Detail Befestigungselemente 5, wobei die oben gezeigten Befestigungselemente 5 der Deckelöffnung 7 der Tasche 4 zugeordnet sind und die unten gezeigten Befestigungselemente 5 dem Boden 6.

Die oberen Befestigungselemente 5 sind als Steckverschluss ausgebildet, wobei der männliche Teil des Befestigungselementes 5 an der Tasche 4 befestigt ist und der weibliche Teil an dem Lehnenelement 9. Dabei können die an der Tasche 4 befestigten Befestigungselemente aus einem Verschluss der Tasche 4, beispielsweise aus einem Rollverschluss ausgebildet sein.

## Patentansprüche

1. Rollwagen (1) umfassend ein Gestell (2), zumindest eine Laufrolle (3), welche an dem Gestell (2) drehbar angeordnet ist sowie eine Tasche (4), welche über Befestigungselemente (5) lösbar an dem Gestell (2) befestigbar ist, **dadurch gekennzeichnet, dass** zumindest ein Befestigungselement (5) einen Formschluss ausbildet.

2. Rollwagen nach Anspruch 1, **dadurch gekennzeichnet, dass** die Tasche (4) eine Rückseite (12), einen Boden (6) und eine Deckelöffnung (7) aufweist.

3. Rollwagen nach Anspruch 1 oder 2, **dadurch gekennzeichnet, dass** die Tasche (4) schlauchförmig ausgebildet ist.

4. Rollwagen nach einem der Ansprüche 1 bis 4, **dadurch gekennzeichnet, dass** die Tasche aus textilem Material ausgebildet ist

5. Rollwagen nach einem der Ansprüche 2 bis 4, **dadurch gekennzeichnet, dass** der Rückseite (12) Befestigungselemente (5) zugeordnet sind.

6. Rollwagen nach einem der Ansprüche 1 bis 5, **dadurch gekennzeichnet, dass** die Befestigungselemente (5) einen Schnappverschluss ausbilden.

7. Rollwagen nach einem der Ansprüche 1 bis 6, **dadurch gekennzeichnet, dass** das Gestell (2) ein Bodenelement (8) und ein Lehnenelement (9) aufweist.

8. Rollwagen nach Anspruch 7, **dadurch gekennzeichnet, dass** das Lehnenelement (9) mit einem Griffelement (10) ausgerüstet ist.

9. Rollwagen nach Anspruch 7 oder 8, **dadurch gekennzeichnet, dass** das Bodenelement (8) mit Befestigungselementen (5) ausgerüstet ist.

10. Rollwagen nach einem der Ansprüche 7 bis 9, **dadurch gekennzeichnet, dass** das Lehnenelement (9) mit Befestigungselementen (5) ausgerüstet ist.

11. Rollwagen nach Anspruch 9 oder 10, **dadurch gekennzeichnet, dass** die Befestigungselemente (5) aus einem Aufnahmeelement (11) ausgebildet sind.

12. Rollwagen nach einem der Ansprüche 7 bis 11, **dadurch gekennzeichnet, dass** das Bodenelement (8) und das Lehnenelement (9) gelenkig miteinander verbunden sind.

13. Rollwagen nach einem der Ansprüche 1 bis 12, **dadurch gekennzeichnet, dass** das zumindest eine Befestigungselement (5) als Schnappverschluss ausgebildet ist.

14. Rollwagen nach Anspruch 13, **dadurch gekennzeichnet, dass** das zumindest eine Befestigungselement (5) als Steckverschluss ausgebildet ist.
